# FASCICULE DE BREVET EUROPEEN

(11) **EP 2 144 782 B1**
(45) Date de publication et mention de la délivrance du brevet: **01.12.2010**
(21) Numéro de dépôt: 08788155.3
(22) Date de dépôt: 10.04.2008
(51) Int. Cl.: B60N 2/015

(54) **DISPOSITIF DE FIXATION DE SIEGE D'UN VEHICULE AUTOMOBILE**
VORRICHTUNG ZUR MONTAGE EINES MOTORFAHRZEUGSITZES
MOTOR VEHICLE SEAT MOUNTING DEVICE

(30) Priorité: 14.05.2007 FR 0755066
(43) Date de publication de la demande: 20.01.2010
(73) Titulaire: Renault S.A.S., 92100 Boulogne-Billancourt (FR)
(72) Inventeur: DELORD, CHRISTIAN, F-93320 Pavillons-Sous-Bois (FR)
(86) Numéro de dépôt international: PCT/FR2008/050633
(87) Numéro de publication internationale: WO 2008/142329

(56) Documents cités:
- EP-A- 0 116 279
- JP-A- 2005 219 521

## Description

La présente invention concerne un dispositif de fixation de siège, et plus particulièrement les sièges de véhicule automobile.

De façon connue, un siège est monté sur des éléments de structure du véhicule, et des boîtiers sont disposés entre l'élément de structure et le siège. Ces boîtiers portent des premiers moyens de fixation aptes à coopérer des moyens de fixation portés par le siège.

L'implantation d'un siège commun à plusieurs véhicules peut permettre de diminuer les coûts et investissements pour les constructeurs automobiles.

Mais selon le type de véhicule, le siège doit être positionné différemment selon au moins la direction verticale, afin d'obtenir l'habitabilité souhaitée. Dans les solutions actuelles, les différences de hauteur sont prises en compte par l'insertion de pièces spécifiques solidaires des sièges. Or, le fait d'ajouter des pièces de tôlerie spécifiques à chaque valeur de hauteur impacte fortement les coûts et investissements, et vient mettre en balance les économies dégagées sur l'utilisation d'un siège commun.

Quand la composante verticale à rattraper est trop importante, on ajoute de façon connue des pontets sur les éléments de structure correspondants. Une autre solution peut consister à concevoir de nouvelles traverses. Dans les deux cas, ces solutions impliquent de concevoir des pièces spécifiques à chaque hauteur différente de siège et impliquent donc un coût.

Du document JP 2005 219 521 A on connaît un dispositif de fixation de siège, qui montre les caractéristiques du préambule de la revendication 1.

Un des objectifs de l'invention est donc de permettre de fixer un siège à des hauteurs différentes sans ajouter de pièces spécifiques à chaque hauteur, que ce soit dans les sièges ou dans la structure du véhicule.

En outre, en réponse à des objectifs que l'on retrouve invariablement chez les différents constructeurs automobiles, la présente invention se veut également peu coûteuse et peu encombrante.

Pour répondre à ces objectifs, l'invention propose un dispositif de fixation de siège du type comportant un élément de fixation apte à être fixé sur un premier et un deuxième élément de structure, cet élément de fixation portant des premiers moyens de fixation de siège, caractérisé en ce que l'élément de fixation présente des éléments de guidage aptes à coulisser par rapport aux deux éléments de structure, de sorte que l'élément de fixation est apte à coulisser entre une première position haute et une deuxième position basse par rapport aux éléments de structure, et en ce que ces éléments de guidage présentent des dimensions et des formes déterminées de sorte que ces éléments de guidage peuvent être soudés sur le premier et le deuxième élément de structure, lorsque le premier élément de fixation est dans la première position haute, ou dans la deuxième position basse, ou dans une position intermédiaire entre la première et la deuxième position.

Cette solution permet d'obtenir des hauteurs de fixation de sièges différentes avec des pièces identiques.

Selon différentes caractéristiques de la présente invention :
- les éléments de guidage de l'élément de fixation sont formés d'au moins deux faces transversales dont la forme et l'orientation permettant le coulissement le long de parois transversales formant le premier élément de structure.
- les deux faces transversales et les parois transversales sont verticales.
- les éléments de guidage sont formés en outre d'une patte de guidage apte à coulisser contre un moyen d'appui formé dans le premier élément de structure.
- la dimension verticale de la patte de guidage est inférieure à la dimension verticale des faces transversales.
- l'élément de fixation est tel que la patte de guidage est sensiblement perpendiculaire aux faces transversales.
- les éléments de guidage sont formés en outre par des feuillures formées à une extrémité de l'élément de fixation, ces feuillures étant aptes à coulisser le long d'une face interne du deuxième élément de structure.
- l'élément de fixation est tel que les feuillures sont sensiblement perpendiculaires aux faces transversales.

L'invention concerne également un véhicule automobile comportant un dispositif de fixation tel que décrit ci dessus, dans lequel le premier et le deuxième éléments de structure sont perpendiculaires, le deuxième élément de structure s'étendant sensiblement longitudinalement sur l'un des côtés du véhicule ou au centre du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un dispositif de fixation selon l'invention, avec l'élément de structure associé ;
- la figure 2 est une vue en coupe du dispositif de l'invention selon une première position verticale ;
- la figure 3 est une vue en coupe du dispositif de l'invention, déplacé vers une seconde position verticale ;
- la figure 4 est une vue en coupe du dispositif de l'invention selon une seconde position verticale.

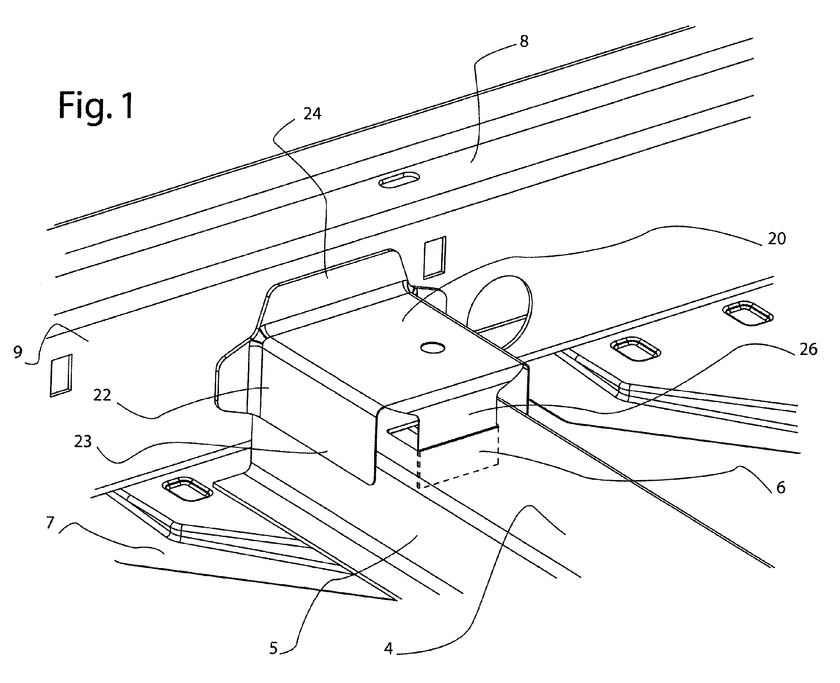

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté à la figure 1, un élément de fixation 2 est positionné entre des éléments de structure 4, 8 du véhicule et le siège à fixer, non représenté sur les figures. Il sera compris qu'un seul élément de fixation 2 est décrit et représenté ci-dessous, mais que plusieurs éléments de fixation selon l'invention peuvent être associés au même siège.

L'élément de fixation 2 selon l'invention est fixé sur un premier élément de structure 4 et sur un deuxième élément de structure 8 s'étendant perpendiculairement au premier élément de structure 4. A titre d'exemple, l'élément de fixation 2 peut être soudé sur les éléments de structure. Tel que représenté à la figure 1, le premier élément de structure 4 est une traverse s'étendant sensiblement transversalement au véhicule et le deuxième élément de structure 8 est un bavolet, structure longitudinale s'étendant sur l'un des côtés du véhicule. Dans le cas ou l'élément de fixation correspond à la fixation intérieure du siège, le deuxième élément de structure est le tunnel, structure longitudinale s'étendant au centre du véhicule.

L'élément de fixation 2 présente la forme d'un boîtier creux, dans lequel une première face de support 20 horizontale est prolongée à deux extrémités opposées par deux faces transversales 22, chaque face transversale 22 étant sensiblement perpendiculaire à la première face de support 20 et prolongeant cette face de support 20 vers le bas. Au moins une feuillure 24, et avantageusement trois tel que représenté à la figure 1, prolonge un bord libre de la face de support 20 situé entre les deux faces transversales 22, tandis que le bord libre opposé est prolongé par une face longitudinale qui forme une patte de guidage 26 sensiblement perpendiculaire à la première face de support 20 et qui prolonge cette face de support 20 vers le bas.

Ainsi, l'élément de fixation 2 présente la forme d'un corps creux dont l'extrémité en regard du deuxième élément de structure 8 est munie de feuillures de fixation 24. Ces feuillures de fixation 24 sont aptes à être plaquées contre la face interne 9 du deuxième élément de structure 8, afin de permettre la soudure de l'élément de fixation 2 sur le deuxième élément de structure 8.

L'élément de fixation 2 est en outre fixé sur le premier élément de structure 4. A cet effet, les faces transversales 22 de l'élément de fixation 2 présentent une dimension verticale suffisante pour être plaqués contre les parois transversales 5 du premier élément de structure 4. En outre, la face longitudinale de l'élément de fixation 2 opposée aux feuillures de fixation 24 forme une patte de guidage 26 qui coopère avec un moyen d'appui 6 formé dans le premier élément de structure 4. Ce moyen d'appui 6, qui présente la forme d'un bord tombé depuis la première face de support 20, peut être obtenu à titre d'exemple par un poinçonnage dans cette première face de support puis par un pliage de cette partie poinçonnée. La patte de guidage 26 peut ainsi coulisser contre le moyen d'appui 6, à travers la première face de support 20. Lorsque l'élément de fixation 2 selon l'invention est dans la position souhaitée, la patte de guidage 26 est fixée sur le moyen d'appui 6, et par exemple soudée.

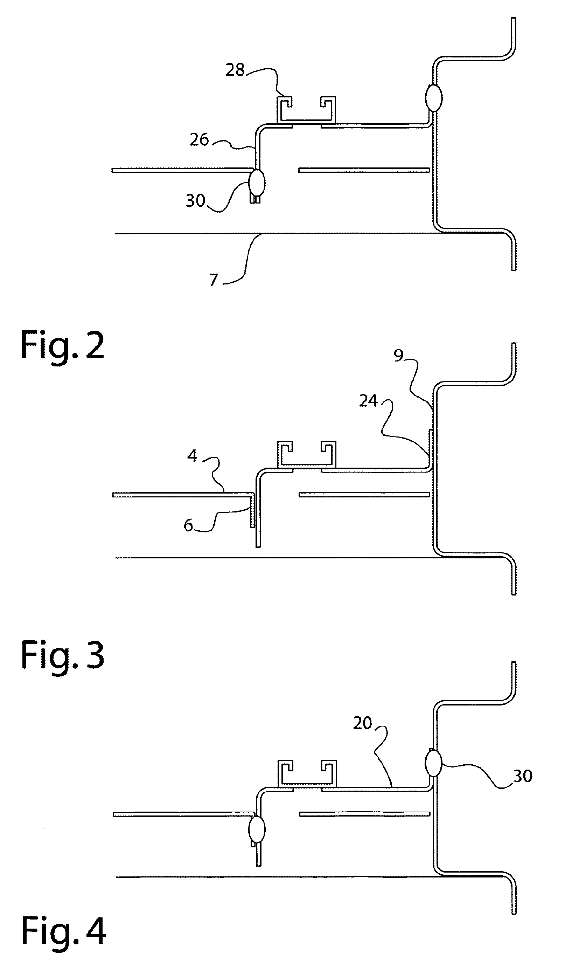

La face de support 20 de l'élément de fixation 2 porte des premiers moyens de fixation 28 du siège aptes à coopérer avec des seconds moyens de fixation portés par le siège. A titre d'exemple, et tel que représenté partiellement sur les figures 2 à 4, ces premiers respectivement seconds moyens de fixation peuvent être un ensemble rail et coulisseau permettant la fixation du siège et son coulissement longitudinal par rapport à la structure du véhicule.

Selon l'invention, l'élément de fixation 2 permet de disposer le premier moyen de fixation 28 du siège à une hauteur déterminée avant de souder l'élément de fixation 2 sur les éléments de structure du véhicule. A cet effet, l'élément de fixation 2 présente des éléments de guidage aptes à permettre le coulissement de l'élément de fixation 2 par rapport au moins au premier élément de structure 4.

Les éléments de guidage sont formés notamment par les faces transversales 22 de l'élément de fixation 2, qui présentent un parallélisme entre elles, de sorte que ces faces transversales 22 peuvent coulisser le long des parois transversales 5 parallèles formant le premier élément de structure 4. Lors de ce coulissement, la patte de guidage 26 formée sur l'élément de fixation 2 coulisse le long du moyen d'appui 6 formé dans le premier élément de structure 4. Le déplacement de l'élément de fixation 2 par rapport au premier élément de structure 4 est bloqué selon la composante longitudinale par la coopération des faces transversales 22 et des parois transversales 5. La coopération de la patte de guidage et du moyen d'appui d'une part, et des feuillures de fixation 24 et de la face interne 9 du deuxième élément de structure 8 d'autre part, bloque le déplacement de l'élément de fixation 2 par rapport au premier élément de structure 4 selon la composante transversale. Il s'agit pour cela que la face interne 9, les feuillures de fixation 24, la patte de guidage 26 et le moyen d'appui 6 soient tous sensiblement verticaux et parallèles.

Seuls des degrés de liberté selon la composante verticale permettent un mouvement de l'élément de fixation 2 par rapport aux éléments de structure 4 et 8. L'élément de fixation 2 peut ainsi coulisser verticalement le long du premier 4 et deuxième 8 élément de structure, entre une première position haute, représentée à la figure 2 et dans laquelle des sièges pourront être montés sur cet élément de fixation en position surélevée, et une deuxième position basse, représentée à la figure 4 et dans laquelle des sièges pourront être montés sur cet élément de fixation en position plus sportive. La dimension des éléments de guidage est apte à permette la fixation de l'élément de fixation 2 sur le premier élément de structure 4 quelle que soit la position du coulissement. Ainsi, lorsque l'élément de fixation 2 est en position haute, telle que représentée à la figure 2, au moins une partie des éléments de guidage est toujours en contact avec le premier et le deuxième élément de structure, et notamment la partie inférieure des faces transversales 22 est en contact avec les parois transversales 5 correspondantes du premier élément de structure 4, et la partie inférieure de la face longitudinale formant la patte de guidage 26 est en contact avec le moyen d'appui 6. La fixation de l'élément de fixation 2 peut ainsi se faire en position haute par soudage 30 des faces transversales 22 sur le premier élément de structure 4, et par soudage 30 des feuillures de fixation 24 sur le deuxième élément de structure 8, la dimension de ces feuillures 24 étant telles qu'elles restent en contact avec la face interne 9 de ce deuxième élément de structure 8 même en positon haute. En position basse, la partie inférieure des faces transversales 22 est amenée au contact de la partie inférieure du premier élément de structure 4, et les points de soudure 30 se font comme précédemment, à une altitude différente. Il sera vérifié que la dimension verticale de la patte de guidage 26 apte à coulisser contre le moyen d'appui 6 est telle que cette patte de guidage 26 ne rentre pas en contact avec le plancher 7 avant que la partie inférieure des faces transversales 22 coopère avec la partie inférieure des parois transversales 5 du premier élément de fixation 2. La dimension verticale de cette patte de guidage 26 sera ainsi moins grande que la dimension verticale des faces transversales 22.

L'invention n'est nullement limitée au mode de réalisation décrit et illustré qui n'a été donné qu'à titre d'exemple.

## Revendications

1. Dispositif de fixation de siège d'un véhicule automobile, du type comportant un élément de fixation (2) apte à être fixé sur un premier (4) et un deuxième (8) élément de structure, cet élément de fixation (2) portant des premiers moyens de fixation de siège (28),
**caractérisé en ce que** l'élément de fixation (2) présente des éléments de guidage aptes à coulisser par rapport aux deux éléments de structure (4, 8), de sorte que l'élément de fixation (2) est apte à coulisser entre une première position haute et une deuxième position basse par rapport aux éléments de structure,
et **en ce que** ces éléments de guidage présentent des dimensions et des formes déterminées de sorte que ces éléments de guidage peuvent être soudés sur le premier et le deuxième élément de structure (4, 8), lorsque l'élément de fixation (2) est dans la première position haute, ou dans la deuxième position basse, ou dans une position intermédiaire entre la première et la deuxième position.

2. Dispositif de fixation selon la revendication 1, **caractérisé en ce que** les éléments de guidage de l'élément de fixation (2) sont formés d'au moins deux faces transversales (22) dont la forme et l'orientation permettent le coulissement le long de parois transversales (5) formant le premier élément de structure (4).

3. Dispositif de fixation selon la revendication 2, **caractérisé en ce que** les deux faces transversales (22) et les parois transversales (5) sont verticales.

4. Dispositif de fixation selon l'une des revendications 2 ou 3, **caractérisé en ce que** les éléments de guidage sont formés en outre d'une patte de guidage (26) apte à coulisser contre un moyen d'appui (6) formé dans le premier élément de structure (4).

5. Dispositif de fixation selon la revendication précédente, **caractérisé en ce que** la dimension verticale de la patte de guidage (26) est inférieure à la dimension verticale des faces transversales (22).

6. Dispositif de fixation selon l'une des revendications 4 ou 5, **caractérisé en ce que** l'élément de fixation (2) est tel que la patte de guidage (26) est sensiblement perpendiculaire aux faces transversales (22).

7. Dispositif de fixation selon l'une des revendications précédentes, **caractérisé en ce que** les éléments de guidage sont formés en outre par des feuillures (24) formées à une extrémité de l'élément de fixation (2), ces feuillures (24) étant aptes à coulisser le long d'une face interne (9) du deuxième élément de structure (8).

8. Dispositif de fixation selon la revendication précédente, **caractérisé en ce que** l'élément de fixation (2) est tel que les feuillures (24) sont sensiblement perpendiculaire aux faces transversales (22).

9. Véhicule automobile comportant un dispositif de fixation selon l'une des revendications 1 à 8, **caractérisé en ce que** le premier (4) et le deuxième (8) éléments de structure sont perpendiculaires, le deuxième élément de structure (8) s'étendant sensiblement longitudinalement sur l'un des côtés du véhicule.

10. Véhicule automobile comportant un dispositif de fixation selon l'une des revendications 1 à 8, **caractérisé en ce que** le premier (4) et le deuxième (8) éléments de structure sont perpendiculaires, le deuxième élément de structure (8) s'étendant sensiblement longitudinalement au centre du véhicule.

## Claims

1. Motor vehicle seat mounting device, of the type comprising a mounting element (2) able to be mounted on a first structural element (4) and a second structural element (8), this mounting element (2) carrying first seat mounting means (28),
**characterized in that** the mounting element (2) has guide elements able to slide with respect to the two structural elements (4, 8) such that the mounting element (2) is able to slide between a first, high position and a second, low position with respect to the structural elements,
and **in that** these guide elements have predetermined dimensions and shapes such that these guide elements can be welded to the first and second structural elements (4, 8) when the mounting element (2) is in the first, high position or in the second, low position or in an intermediate position between the first and second positions.

2. Mounting device according to Claim 1, **characterized in that** the guide elements of the mounting element (2) are formed of at least two transverse faces (22), the form and alignment of which enable sliding along transverse walls (5) forming the first structural element (4).

3. Mounting device according to Claim 2, **characterized in that** the two transverse faces (22) and the transverse walls (5) are vertical.

4. Mounting device according to either of Claims 2 and 3, **characterized in that** the guide elements are further formed of a guide tab (26) able to slide against a support means (6) formed in the first structural element (4).

5. Mounting device according to the preceding claim, **characterized in that** the vertical dimension of the guide tab (26) is less than the vertical dimension of the transverse faces (22).

6. Mounting device according to either of Claims 4 and 5, **characterized in that** the mounting element (2) is designed such that the guide tab (26) is approximately perpendicular to the transverse faces (22).

7. Mounting device according to one of the preceding claims, **characterized in that** the guide elements are further formed by rebates (24) formed at one end of the mounting element (2), these rebates (24) being able to slide along an internal face (9) of the second structural element (8).

8. Mounting device according to the preceding claim, **characterized in that** the mounting element (2) is designed such that the rebates (24) are approximately perpendicular to the transverse faces (22).

9. Motor vehicle comprising a mounting device according to one of Claims 1 to 8, **characterized in that** the first structural element (4) and the second structural element (8) are perpendicular, the second structural element (8) extending approximately longitudinally along one of the sides of the vehicle.

10. Motor vehicle comprising a mounting device according to one of Claims 1 to 8, **characterized in that** the first structural element (4) and the second structural element (8) are perpendicular, the second structural element (8) extending approximately longitudinally in the centre of the vehicle.

## Patentansprüche

1. Vorrichtung zur Befestigung eines Sitzes eines Kraftfahrzeugs der Art, die ein Befestigungselement (2) umfasst, das geeignet ist, an einem ersten (4) und einem zweiten (8) Strukturelement befestigt zu sein, wobei dieses Befestigungselement (2) erste Sitzbefestigungsmittel (28) trägt, **dadurch gekennzeichnet, dass** das Befestigungselement (2) Führungselemente aufweist, die geeignet sind, bezüglich der zwei Strukturelemente (4, 8) so zu gleiten, dass das Befestigungselement (2) geeignet ist, zwischen einer hohen ersten Position und einer niedrigen zweiten Position bezüglich der Strukturelemente zu gleiten,
und dass diese Führungselemente Abmessungen und Formen haben, die so bestimmt sind, dass diese Führungselemente an das erste und das zweite Strukturelement (4, 8) geschweißt werden können, wenn das Befestigungselement (2) in der hohen ersten Position ist oder in der niedrigen zweiten Position oder in einer Position zwischen der ersten und der zweiten Position ist.

2. Befestigungsvorrichtung nach Anspruch 1, **dadurch gekennzeichnet, dass** die Führungselemente des Befestigungselements (2) aus mindestens zwei Querflächen (22) gebildet sind, deren Form und Ausrichtung das Gleiten entlang von Querwänden (5) gestatten, die das erste Strukturelement (4) bilden.

3. Befestigungsvorrichtung nach Anspruch 2, **dadurch gekennzeichnet, dass** die beiden Querflächen (22) und die Querwände (5) vertikal sind.

4. Befestigungsvorrichtung nach Anspruch 2 oder 3, **dadurch gekennzeichnet, dass** die Führungselemente außerdem aus einem Führungsansatz (26) gebildet sind, der geeignet ist, gegen ein Stützmittel (6) zu gleiten, das im ersten Strukturelement (4) gebildet ist.

5. Befestigungsvorrichtung nach dem vorhergehenden Anspruch, **dadurch gekennzeichnet, dass** die vertikale Abmessung des Führungsansatzes (26) geringer als die vertikale Abmessung der Querflächen (22) ist.

6. Befestigungsvorrichtung nach Anspruch 4 oder 5, **dadurch gekennzeichnet, dass** das Befestigungselement (2) derart ist, dass der Führungsansatz (26) im Wesentlichen senkrecht zu den Querflächen (22) verläuft.

7. Befestigungsvorrichtung nach einem der vorhergehenden Ansprüche, **dadurch gekennzeichnet, dass** die Führungselemente außerdem durch Falze (24) gebildet sind, die an einem Ende des Befestigungselements (2) ausgebildet und geeignet sind, entlang einer inneren Fläche (9) des zweiten Strukturelements (8) zu gleiten.

8. Befestigungsvorrichtung nach dem vorhergehenden Anspruch, **dadurch gekennzeichnet, dass** das Befestigungselement (2) derart ist, dass die Falze (24) im Wesentlichen senkrecht zu den Querflächen (22) verlaufen.

9. Kraftfahrzeug mit einer Befestigungsvorrichtung nach einem der Ansprüche 1 bis 8, **dadurch gekennzeichnet, dass** das erste (4) und das zweite (8) Strukturelement senkrecht sind, wobei sich das zweite Strukturelement (8) im Wesentlichen in Längsrichtung an einer der Seiten des Fahrzeugs erstreckt.

10. Kraftfahrzeug mit einer Befestigungsvorrichtung nach einem der Ansprüche 1 bis 8, **dadurch gekennzeichnet, dass** das erste (4) und das zweite (8) Strukturelement senkrecht sind, wobei sich das zweite Strukturelement (8) im Wesentlichen in Längsrichtung zur Mitte des Fahrzeugs erstreckt.
